(19) Europäisches Patentamt
European Patent Office
Office européen des brevets

(11) **EP 4 411 571 A1**

(12) **EUROPEAN PATENT APPLICATION**

(43) Date of publication:
**07.08.2024 Bulletin 2024/32**

(21) Application number: **24152569.0**

(22) Date of filing: **18.01.2024**

(51) International Patent Classification (IPC):
**G06F 18/20** (2023.01)    **G06V 20/69** (2022.01)

(52) Cooperative Patent Classification (CPC):
**G06F 18/295; G06F 18/29; G06V 20/69**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 JP 2023012524**

(71) Applicants:
• **FUJITSU LIMITED**
  **Kawasaki-shi, Kanagawa 211-8588 (JP)**
• **RIKEN**
  **Wako-shi, Saitama 351-0198 (JP)**

(72) Inventors:
• **WADA, Mutsuyo**
  **Kawasaki-shi, Kanagawa, 211-8588 (JP)**
• **WADA, Yuichiro**
  **Kawasaki-shi, Kanagawa, 211-8588 (JP)**
• **YAMAZAKI, Kimihiro**
  **Kawasaki-shi, Kanagawa, 211-8588 (JP)**
• **KATOH, Takashi**
  **Kawasaki-shi, Kanagawa, 211-8588 (JP)**
• **TOKUHISA, Atsushi**
  **Wako-shi, Saitama, 351-0198 (JP)**

(74) Representative: **Hoffmann Eitle**
**Patent- und Rechtsanwälte PartmbB
Arabellastraße 30
81925 München (DE)**

(54) **PATH SELECTING PROGRAM, PATH SELECTING METHOD, AND PATH SELECTING APPARATUS**

(57)    A path selecting program causes a computer to execute a process including: extracting(S103) a plurality of representative points from a presence probability distribution of states of a target; identifying(S104) a first plurality of state transition paths between the plurality of representative points; and selecting(S303) a second plurality of state transition paths from the first plurality of state transition paths, based on a probability density of each path included in the first plurality of state transition paths.

FIG.1

EP 4 411 571 A1

## Description

[Technical Field]

The present disclosure relates to a path selecting program, a path selecting method, and a path selecting apparatus.

[Background Art]

Obtaining transition pathways for molecules such as proteins is important in applications such as drug discoveries, and discussing the pathways and transitions of free energy, with an aid of molecular dynamics (MD) simulations or the like, provide a key to the understanding of their reaction processes.

As a technology related to constructions of such pathways, there has been a disclosure related to single-particle analysis software for aiding reconstructing continuous ensembles of three-dimensional protein structures from a two-dimensional cryogenic electron microscopic (EM) images, using a deep neural network. The related technologies are described, for example, in: Laurel F Kinman, Barrett M Powell, Ellen D Zhong, Bonnie Berger, and Joseph H Davis. Uncovering structural ensembles from single-particle cryo-em data using cryodrgn. Nature Protocols, pages 1-31, 2022.

[Summary of invention]

[Technical Problem]

However, such single-particle analysis software has an aspect that manual operations of specialists or the like are requested to obtain a valid continuous deformation of a protein from the structure obtained from two-dimensional cryogenic EM images. Examples of such manual operation include: preparing inputs to the single-particle analysis software; training the deep neural network; exploring for a particle filter and a model for the single-particle analysis software; investigating for the structure ensembles; and visualizing the structural transitions.

Accordingly, it is an object in one aspect of an embodiment of the present invention to provide a path selecting program, a path selecting method, and a path selecting apparatus capable of automating the constructions of state transition paths.

[Solution to Problem]

According to an aspect of an embodiment, a path selecting program causes a computer to execute a process including: extracting a plurality of representative points from a presence probability distribution of states of a target; identifying a first plurality of state transition paths between the plurality of representative points; and selecting a second plurality of state transition paths from the first plurality of state transition paths, based on a probability density of each path included in the first plurality of state transition paths.

[Advantageous Effects of Invention]

It is possible to achieve automating the constructions of state transition paths.

[Brief Description of Drawings]

FIG. 1 is a block diagram illustrating an example of a functional configuration of a server device;
FIG. 2 is a schematic illustrating an example of a sparse graph;
FIG. 3 is a schematic illustrating an example of a pathway extraction condition;
FIG. 4 is a schematic illustrating an example of a pathway graph diagram;
FIG. 5 is a graph illustrating an example of a quasi-free energy transition of a pathway;
FIG. 6 is a flowchart illustrating the sequence of a graph generating process;
FIG. 7 is a flowchart illustrating the sequence of a pathway selecting process; and
FIG. 8 is a schematic illustrating an example of a hardware configuration.

[Embodiments for Carrying Out the Invention]

Preferred embodiments will be explained with reference to accompanying drawings. These embodiments are merely illustrative of some examples or aspects, and such examples are not intended to limit the range of values, the scope of functions, or use cases, in any way. The embodiments may also be combined as appropriate, within the scope in which the processes do not contradict with each other.

First Embodiment

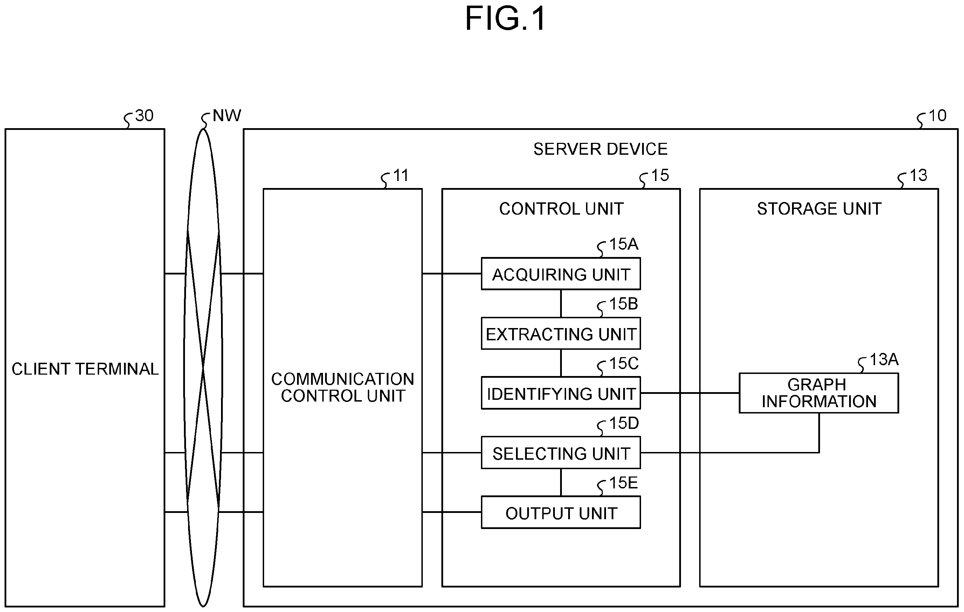

FIG. 1 is a block diagram illustrating an example of a functional configuration of a server device 10. The server device 10 illustrated in FIG. 1 is configured to provide a path selecting function for automatically constructing a path, that is, what is called a pathway, of the state transition of a target included in EM images captured by an electron microscope, such as a cryogenic electron microscope.

In the explanation hereunder, a molecule, such as a protein, will be used as one example of the target, but the target is not limited to a molecule. Examples of the target other than a molecule include a network having some notion of energy (e.g., a social network the accounts of which can be represented as nodes, based on the amount of backlash that is the density of criticisms received).

The server device 10 is one example of a computer providing the path selecting function. Merely as one example, by implementing the server device 10 as a platform-as-a-service (PaaS) or software-as-a-service (SaaS) application, the path selecting function can be provided as a cloud service. The server device 10 may also be implemented as an on-premise server providing the path selecting function.

The server device 10 can become connected communicatively with a client terminal 30 via a network NW, as illustrated in FIG. 1. The network NW may be any kind of wireless or wired communication network, examples of which include as the Internet or local area network (LAN). In the example illustrated in FIG. 1, one client terminal 30 is connected to the one server device 10, but any number of client terminals 30 may be connected, without limitation to one.

The client terminal 30 corresponds to one example of a computer that receives the service of the path selecting function. The client terminal 30 may be implemented as a desktop or laptop computer, for example. However, this is merely one example, and the client terminal 30 may be any computer examples of which include a portable terminal and a wearable terminal.

In the example illustrated in FIG. 1, the path selecting function is provided as a client server system, but this example is used merely for the illustrative purpose, and the path selecting function may also be provided on a stand-alone device.

An example of a functional configuration of the server device 10 according to this embodiment will now be explained. FIG. 1 illustrates schematized blocks that are related to the path selecting function of the server device 10. As illustrated in FIG. 1, the server device 10 includes a communication control unit 11, a storage unit 13, and a control unit 15. In FIG. 1, only extractions of the functional units relevant to the path selecting function are illustrated, and therefore, functional units other than those illustrated may be included in the server device 10.

The communication control unit 11 is a functional unit for controlling the communication with other devices such as the client terminal 30. Merely as an example, the communication control unit 11 may be implemented as a network interface card such as a LAN card. As one aspect, the communication control unit 11 is configured to receive EM images from which a pathway is constructed, receive a request for constructing a pathway from the client terminal 30, and output a response to the request to the client terminal 30.

The storage unit 13 is a functional unit for storing therein various types of data. The storage unit 13 is implemented as an internal, external, or auxiliary storage of the server device 10, merely as an example. The storage unit 13 stores therein graph information 13A, for example. The graph information 13A will be explained later, together with an explanation of a situation in which the information is registered or referred.

The control unit 15 is a functional unit for controlling the entire server device 10. For example, the control unit 15 may be implemented as a hardware processor. As illustrated in FIG. 1, the control unit 15 includes an acquiring unit 15A, an extracting unit 15B, an identifying unit 15C, a selecting unit 15D, and an output unit 15E. The control unit 15 may also be implemented as a hardware wired logic.

The acquiring unit 15A is a processing unit for acquiring a presence probability distribution of a molecule. Merely as an example, the acquiring unit 15A receives an input of EM images captured by an electron microscope such as a cryogenic electron microscope. The EM image received herein may include particles of a molecule such as a protein. The acquiring unit 15A then inputs the received EM image to a machine learning model that is configured to receive an input of one or more EM images and to output a presence probability distribution of a molecule, to acquire the presence probability distribution of the molecule.

Such a machine learning model may be implemented as a neural network, such as a deep neural network, merely as an example. The machine learning model is then trained using, for example, EM images having presence probability distributions appended thereto as ground-truth labels, respectively, as the training data. Such presence probability distributions may be acquired through experiments. The machine learning model may be trained using the EM images as the explanatory variable of the machine learning model, and the presence probability distribution as the objective variable of the machine learning model, in accordance with some machine learning algorithm such as deep learning. The parameters of the machine learning model are then updated by back-propagation the loss between the outputs of the machine learning model in response to the inputs of the EM images, and the respective ground-truth labels, for example.

Explained below is a configuration in which the presence probability distribution of the molecule is modeled as Gaussian mixture models (GMMs), merely as an example. However, the presence probability distribution of the molecule may also be modeled as any model other than a GMM.

The extracting unit 15B is a processing unit for extracting a plurality of representative points from the presence probability distribution of the molecule. The extracting unit 15B may be configured to extract, as representative points, points of local maxima in the GMMs acquired by the acquiring unit 15A, merely as an example. The extracting unit 15B adjusts the number of samples in a point set of the GMMs having been mathematically given the local maxima, in accordance with the scale of the GMMs having been acquired by the acquiring unit 15A. The extracting unit 15B then samples the local maxima from the GMMs acquired by the acquiring unit 15A. Examples of the sampling method includes a method for extracting the centroids from k-means clusters, as representative points, and a method for estimating the GMMs using a Bayesian information criterion with a large number of components, then estimating the GMMs with a smaller number of components, and using the points of local maxima as the representative points.

The identifying unit 15C is a processing unit for identifying a first plurality of state transition paths between a plurality of representative points. The "first plurality of state transition paths" herein is graph data used in pathway construction. Merely as an example, establishing the n representative points extracted by the extracting unit 15B as nodes, the identifying unit 15C establishes an edge connecting each pair of nodes in combinations $_nC_2$ selecting two nodes out of n nodes. In this manner, a fully connected graph, each node of which is connected to the other nodes with corresponding edges, is obtained.

The fully connected graph thus obtained corresponds to one example of the first plurality of state transition paths, and may be stored in the storage unit 13 as the graph information 13A. For example, each of the nodes in the fully connected graph may be stored in a manner associated with a quasi-free energy that is a conversion of the probability density corresponding to the node in the GMMs. Each of the edges in the fully connected graph is stored in a manner associated with a path length of the edge in the GMMs, and to a data set of quasi-free energies of the points in the point set that forms the edge.

The path length of the edge or the probability density corresponding to the point set forming the edge can be calculated, for example, by computing a most likely pathway, that is, what is called a ridgeline, between two mean vectors corresponding to local maxima in the GMMs. For the calculation of the ridgeline, it is possible to use a technology that outputs the path obtained by selecting such transition that the path length is shorter and the average probability on the path is larger for each transition between two points where the section between two mean vectors on the GMMs are divided into K parts. It is also possible to use a technology disclosed in Citation 1. This technology constructs the most likely pathway between the mean vectors in the GMMs with two classes, based on the mathematical definition of the point sets giving the local maxima to the GMMs.

Citation 1: Hennig, C.: Ridgeline plot and clusterwise stability as tools for merging mixture Gaussian components. In Classification as a Tool for Research (pp. 109-116)(2010).

The quasi-free energy can be obtained by converting a probability density. For this conversion, it is possible to use a conversion formula defining an inversion correlation in which a higher probability density P(z) results in a lower quasi-free energy E(z), examples of which are indicated below as mathematical formulas (1) and (2).

$$P(z) \propto \exp(-\beta E(z)) \qquad (1)$$

$$E(z) \propto -\log P(z) \qquad (2)$$

Although a fully connected graph may be used for the pathway construction, it is also possible, from the viewpoint of reducing the computational burden at the time of graph search, to use a graph having edges partly removed from the fully connected graph, that is, a graph including extractions of edges that are more significant in the pathway construction, in the pathway construction. Such a graph will be sometimes referred to as a "sparse graph", from the viewpoint of distinguishing from the fully connected graph.

Merely as an example, the identifying unit 15C may generate a minimum-spanning-tree (MST)-based graph as a sparse graph, by extracting the parts corresponding to a minimum spanning tree from the fully connected graph. The minimum spanning tree herein is a spanning tree having the edges resulting in the minimum total cost. As the edge cost formulized in the minimum spanning tree problem, the path length, the probability density, or the quasi-free energy may be used. For example, when the probability density or the quasi-free energy is used as the edge cost, by taking a cumulative sum of the quasi-free energies in the point set corresponding to the edge and dividing the cumulation by the path length, it becomes possible to use a normalized quasi-free energy as the edge cost.

One example of algorithms for generating such an MST-based graph will now be explained. More specifically, the identifying unit 15C may implement generation of the MST-based graph following the sequence of Steps S1 to S3 explained below. In other words, at Step S1, the identifying unit 15C defines a ridgeline distance matrix M of C×C by calculating an approximation of the ridgeline distance that is the path length of the edge corresponding thereto, for each pair $(\mu_i, \mu_j)$ from a mean vector set $\{\mu_1, ..., \mu_c\}$, $\mu_1 \in R^d$ in the GMMs (Step S1). At Step S2, the identifying unit 15C defines the distance of each edge in a complete undirected graph having $\{\mu_1, ..., \mu_c\}$ as a vertex set, using the matrix M. The identifying unit 15C then calculates the graph shortest-path distance (geodesic distance) between every pair of vertices in the undirected graph. The resultant C×C matrix of the graph shortest-path distance is denoted as G. At Step S3, based on $i^*=\mathrm{argmax}_c\pi_c$, the identifying unit 15C searches for a vertex j* where the graph shortest-path distance is maximized, from the matrix G, and outputs the path $i^* \to ... \to j^*$. The identifying unit 15C then adds the remaining vertices using matrix G. Once such a tree (minimum spanning tree) is defined, the identifying unit 15C raises the 3D density on each directed edge, using a trained decoder.

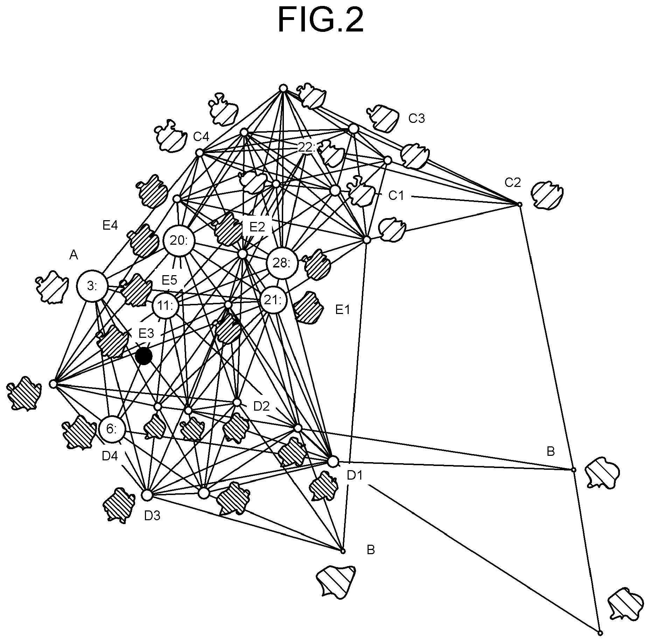

The MST-based graph generated in the manner described above is also a sparse graph resultant of modifying the fully connected graph, and corresponds to an example of the first plurality of state transition paths. FIG. 2 is a schematic illustrating an example of such a sparse graph. FIG. 2 illustrate a sparse graph generated from GMMs obtained from EM images including ribosome images, merely as an example. As illustrated in FIG. 2, it can be seen that unnecessary edges are removed in the sparse graph, compared with the fully connected graph. Therefore, by using the sparse graph illustrated in FIG. 2 in the pathway construction, the computational load in the pathway construction can be reduced, by the amount corresponding to the removed unnecessary edges. Such an MST-based graph may be stored in the storage unit 13, as the graph information 13A.

The selecting unit 15D is a processing unit for selecting a second plurality of state transition paths from the first plurality of state transition paths, based on the probability density of each path included in the first plurality of state transition paths. One example of the "second state transition path" include a pathway. As one embodiment, the selecting unit 15D selects one or more pathways from the sparse graph or fully connected graph included in the graph information 13A, based on the probability density of each path in the fully connected graph or the sparse graph.

An example in which a pathway is extracted from a sparse graph will now be explained, merely as an example. More specifically, the selecting unit 15D designates a condition for generating a pathway. Merely as an example, the selecting unit 15D may receive a pathway generation condition manually defined by a user, from the client terminal 30. Examples of the pathway generation condition includes the number of pathway candidates generated from the sparse graph, a designation of a start point node and an end point node of a pathway, the number of nodes and edges included in the pathway, the total path length, a lower bound and an upper bound of the total path length. The user of the path selecting function can set these conditions as the user wishes, depending on the task of the user. Explained herein is an example in which the pathway generation condition is designated manually, but these pathway generation conditions do not necessarily need to be designated manually, and it is needless to say that the pathway generation conditions may also be defined by a system.

The selecting unit 15D generates a plurality of pathway candidates in accordance with the pathway generation conditions. For example, the selecting unit 15D may generate a plurality of pathway candidates by executing a random walk across the sparse graph, in accordance with the pathway generation conditions.

The selecting unit 15D then narrows down the plurality of pathway candidates, by applying filtering to the plurality of pathway candidates, based on one or more of the followings: the path length of each edge included in the plurality of pathway candidates; data sequence of quasi-natural energies corresponding to the point set forming the edge; and a combination of thereof.

In the filtering, the following pathway extraction conditions may be used, merely as an example. A pathway extraction condition may specify, for example, that the pathway candidate is to include edges having a path length equal to or shorter than a threshold. This is because the state transitions including edges with shorter path lengths can be said to be more natural.

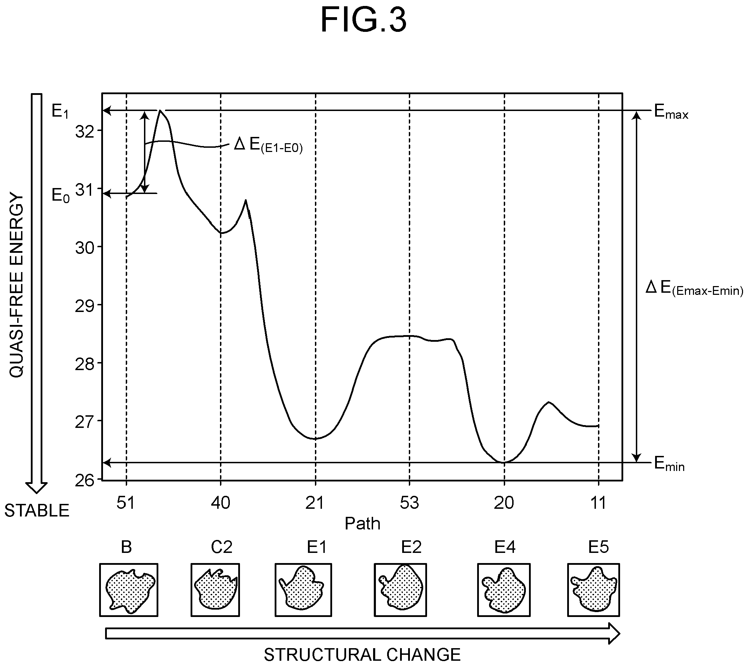

The pathway extraction condition may also include various conditions related to quasi-free energy. FIG. 3 is a schematic illustrating an example of such a pathway extraction condition. For the convenience of explanation, FIG. 3 illustrates a graph plotting the transition of the quasi-free energy of a path including a node B as a start point, and transitioning to a node E5, via a node C2, a node E1, a node E2, a node E4. The horizontal axis of the graph illustrated in FIG. 3 represents the paths, and the vertical axis represents the quasi-free energy.

It is possible to set a condition A, as an example of the pathway extraction condition, specifying that the maximum quasi-free energy Emax of all of the structures on the pathway illustrated in FIG. 3 is to be equal to or lower than an upper bound. It is possible to set a condition B, as another example of the pathway extraction condition, specifying that a difference between the maximum and the minimum quasi-free energies $\Delta E = E_{max} - E_{min}$ of all of the structures on the pathway illustrated in FIG. 3 is to be equal to or lower than a threshold. It is also possible to set a condition C, as another example of the pathway extraction condition, specifying that the quasi-free energy Eo of the initial structure illustrated in FIG. 3 is to be equal to or lower than a threshold. Still furthermore, it is also possible to set a condition D, as another example of the pathway extraction condition, specifying that the energy difference $\Delta E = E_1 - E_0$ between the quasi-free energy Eo of the initial structure illustrated in FIG. 3 and the energy $E_1$ that is the highest energy level during the transition to the next structure is equal to or lower than a threshold. These conditions A to D may be system defined or user defined.

Given such pathway extraction conditions, the selecting unit 15D selects one or more pathway candidates that satisfy such pathway extraction conditions, from the plurality of pathway candidates. The selecting unit 15D may also calculate a score for each of the pathway candidates. For example, the selecting unit 15D may be configured to calculate a higher score as the difference between the maximum and the minimum quasi-free energies $\Delta E$ of all of the structures on the pathway becomes greater; to calculate a higher score as the quasi-free energy Eo of the initial structure becomes higher; or to calculate a higher score as the energy difference $\Delta E$ between the quasi-free energy Eo of the initial structure and the highest energy level $E_1$ during the transition to the next structure becomes greater. The selecting unit 15D may then use a condition specifying that such a score is to be equal to or higher than a threshold, as the pathway extraction condition.

The output unit 15E is a processing unit that outputs information related to a pathway. Merely as an example, the output unit 15E outputs information related to the pathway extracted by the selecting unit 15D, to the client terminal 30. At this time, the output unit 15E may output information related to a pathway having a higher score at a higher priority, among those extracted by the selecting unit 15D. For example, the output unit 15E may display information related to a pathway having the highest score, or information related to pathways having scores within a particular number of ranks from the top.

At this time, the output unit 15E may display, as some examples of the information related to a pathway, the pathway graph diagram, a quasi-free energy transition corresponding to the state transition of the pathway, or a video of molecule deformation corresponding to the state transition on the paths included in the pathway. In the explanation herein, the client terminal 30 has been explained as one example of where the information related to the pathway is to be output. However, without limitation thereto, it is also possible to output information such as the transition of the quasi-free energy on the pathway, to a simulator executing a molecular dynamics simulation.

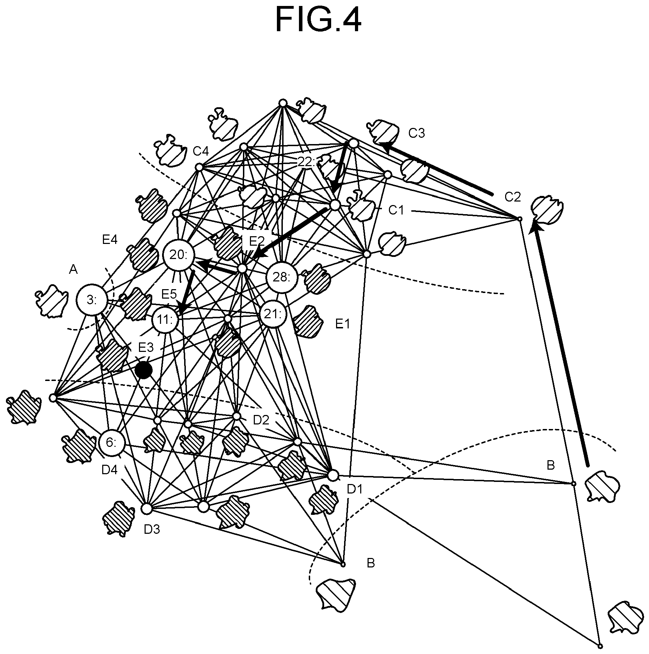

FIG. 4 is a schematic illustrating an example of a pathway graph diagram. In FIG. 4, some of the pathways extracted by the selecting unit 15D are plotted to a sparse graph generated from the GMMs obtained from the EM images including the images of ribosomes. In FIG. 4, among the nodes included in the sparse graph, those with lower quasi-free energy are rendered with larger node symbols. By presenting the pathway using such graphs, it is possible to recognize that it is highly likely for a pathway transition in the order of the node B, to the node C2, the node C3, the node C1, the node E2, the node E4, and the node E5 to occur. Therefore, it is possible to provide useful information for facilitating the understanding the reaction process of components such as a protein.

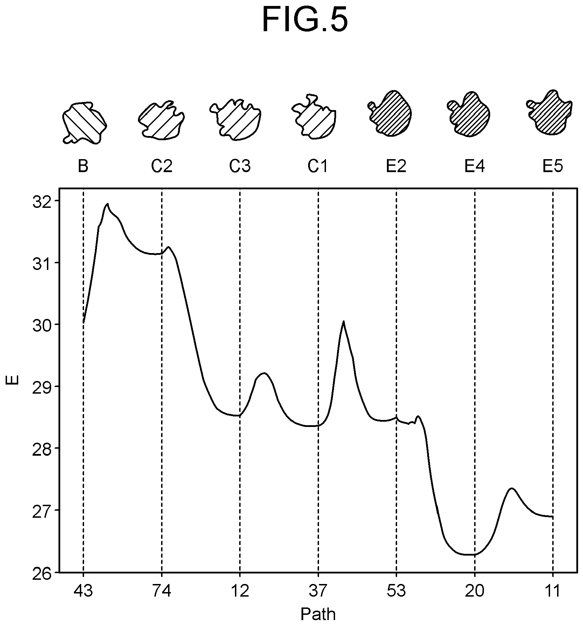

FIG. 5 is a graph illustrating an example of the quasi-free energy transition of a pathway. The horizontal axis of the graph illustrated in FIG. 5 represents paths, and the vertical axis represents the quasi-free energy. In FIG. 5, the data sequence of the quasi-free energies corresponding to the point set forming each edge included in the pathway illustrated in FIG. 4 is plotted to the edge, as a rendering of a waveform corresponding to the transition of the quasi-free energy. By presenting the quasi-free energy transition of a pathway, it is possible to provide useful information for facilitating the understanding the reaction process of a component such as a protein.

In the example explained above, quasi-free energy is used in extracting and outputting the pathway. However, it is also possible to use the probability density or an abundance ratio obtained from the probability density in extracting and outputting the pathway. In such a case, the output unit 15E may be configured to extract a pathway using probability density, convert the probability densities of the respective nodes included in the pathway into quasi-free energies, and display the transition of the quasi-free energy of the pathway. Alternatively, the output unit 15E may be configured to extract a pathway using probability densities, and display the transition of the probability density of the extracted pathway.

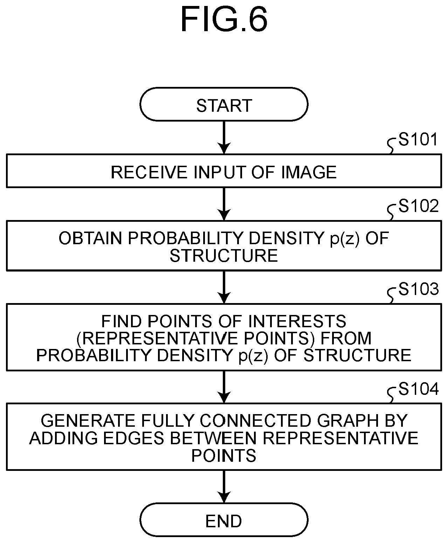

FIG. 6 is a flowchart illustrating the sequence of a graph generating process. As illustrated in FIG. 6, the acquiring unit 15A receives an input of EM images captured by an electron microscope such as a cryogenic electron microscope (Step S101). The EM images received at Step S101 may include particles of a molecule such as a protein.

The acquiring unit 15A then acquires the presence probability distribution P(z) of the molecule, by inputting the EM image received at Step S101 to a machine learning model configured to output the presence probability distribution of a molecule, in response to an input of EM images thereof (Step S102).

The extracting unit 15B then extracts a plurality of representative points, such as the local maxima of the GMMs, from the presence probability distribution P(z) of the molecule acquired at Step S102 (Step S103).

The identifying unit 15C then generates a fully connected graph, using the n representative points extracted at Step S103 as nodes, by setting an edge connecting each pair of nodes in the combinations $_nC_2$ selecting two nodes out of n nodes (Step S104), and ends the process.

The fully connected graph thus generated is stored in the storage unit 13, as the graph information 13A. Although explanations are omitted in the flowchart illustrated in FIG. 6, it is also possible to generate an MST-based graph from the fully connected graph as a sparse graph, in the manner described above.

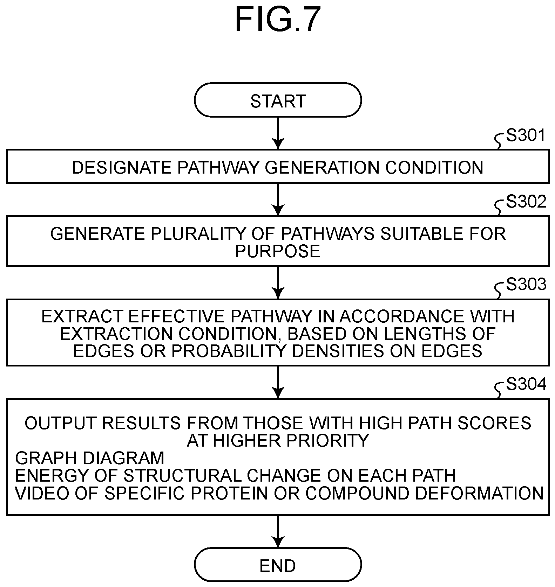

FIG. 7 is a flowchart illustrating the sequence of a pathway selecting process. As illustrated in FIG. 7, the selecting unit 15D designates a pathway generation condition (Step S301). Merely as an example, the selecting unit 15D may receive a pathway generation condition manually defined by a user, from the client terminal 30.

The selecting unit 15D then generates a plurality of pathway candidates by executing a random walk through the sparse graph included in the graph information 13A, in accordance with the pathway generation condition designated at Step S301 (Step S302).

The selecting unit 15D then extracts one or more pathway candidates satisfying an extraction condition that is based on the probability densities of the edges, from the plurality of pathway candidates generated at Step S302, as one or more pathways (Step S303) .

The output unit 15E then outputs information related to the pathways extracted by the selecting unit 15D, to the client terminal 30 (Step S304). At this time, the output unit 15E may output information related to a pathway with a higher score at a higher priority, among the pathways extracted at Step S303. Examples of the pathway-related information to be output include a pathway graph diagram, the quasi-free energy transition corresponding to the state transition of the pathway, or a video of a molecule deformation corresponding to the state transition on the paths included in the pathway.

As described above, the path selecting function according to this embodiment generates a plurality of pathway candidates, using a graph including representative points of the presence probability distribution of a molecule, and extracts a pathway candidate including edges with probability densities satisfying a specific condition therefrom, as a pathway. Therefore, with the path selecting function according to this embodiment, it is possible to automate the pathway construction. As a result, it is also possible to reduce manual operations of specialists or the like.

Second Embodiment

Although an embodiment related to the apparatus according to the disclosure has been explained above, various other embodiments of the present invention are still possible, in addition to the embodiment described above. Therefore, another embodiment falling within the scope of the present invention will now be explained.

The processing sequence, the control sequence, the specific names, and the information including various types of data and parameters described in the document and the drawings according to the first embodiment may be changed in any way, unless specifically indicated otherwise.

Furthermore, the configuration in which the elements of each of the apparatuses is integrated or distributed is not limited to those illustrated in the drawings. In other words, the whole or a part of the elements may be distributed or integrated functionally or physically into any units, depending on various loads and conditions of use. Furthermore, the whole or a part of the elements of each of the apparatuses may be implemented as a CPU and a computer program parsed and executed by the CPU, or as hardware using a wired logic.

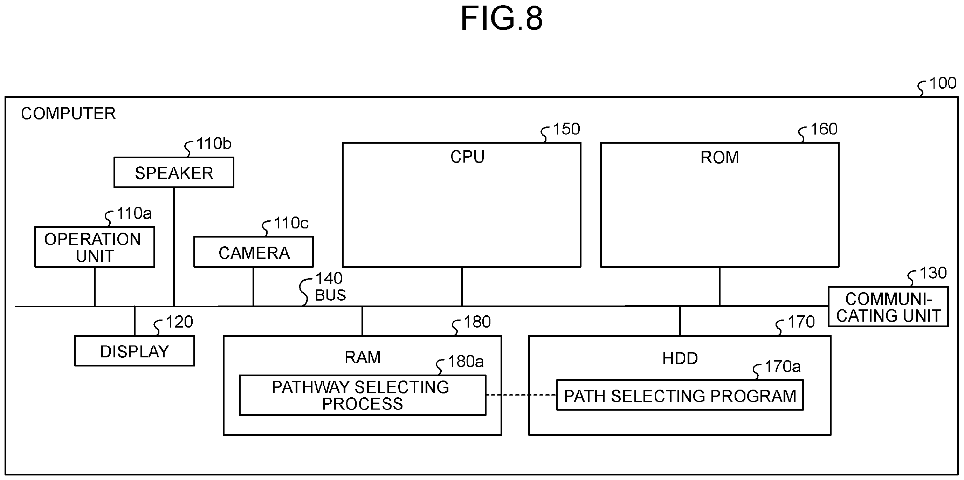

The various processes explained in the first embodiment may be implemented by causing a computer such as a personal computer or a workstation to execute a computer program prepared in advance. An example of such a computer executing the path selecting program having the same functions as those according to the first and the second embodiments will now be explained with reference to FIG. 8.

FIG. 8 is a schematic illustrating an example of a hardware configuration. As illustrated in FIG. 8, a computer 100 includes an operation unit 110a, a speaker 110b, a camera 110c, a display 120, and a communicating unit 130. The computer 100 also includes a CPU 150, a read-only memory (ROM) 160, a hard-disk drive (HDD) 170, and a random access memory (RAM) 180. These units 110 to 180 are connected one another over a bus 140.

As illustrated in FIG. 8, the HDD 170 stores therein a path selecting program 170a exerting functions that are the same as those of the acquiring unit 15A, the extracting unit 15B, the identifying unit 15C, the selecting unit 15D, and the output unit 15E explained above in the first embodiment. This path selecting program 170a may be integrated or separated, in the same manner as the elements such as the acquiring unit 15A, the extracting unit 15B, the identifying unit 15C, the selecting unit 15D, and the output unit 15E, illustrated in FIG. 1. In other words, all of the data explained in the first embodiment does not need to be stored in the HDD 170, and only the data used in a process may be stored in the HDD 170.

In such an environment, the CPU 150 reads the path selecting program 170a from the HDD 170, and loads the path selecting program 170a onto the RAM 180. As a result, the path selecting program 170a comes to function as a pathway selecting process 180a, as illustrated in FIG. 8. This pathway selecting process 180a loads various types of data read from the HDD 170 onto a storage area allocated to the pathway selecting process 180a, in the RAM 180, and executes various processes using the loaded data. Examples of the process executed by the pathway selecting process 180a include the processes illustrated in FIGS. 6 and 7. The CPU 150 does not need to have all of the processing units described in the first embodiment running, as long as the processing units corresponding to the process to be executed are implemented virtually.

The path selecting program 170a described above do not need to be stored in the HDD 170 or the ROM 160 from the beginning. For example, the path selecting program 170a may be stored in what is called a "portable physical medium" such as a flexible disk (FD), a compact disc read-only memory (CD-ROM), a digital versatile disc (DVD), a magneto-optical disk, or an integrated circuit (IC) card, to be inserted into the computer 100. The computer 100 may acquire the path selecting program 170a from such a portable physical medium, and execute the program. Furthermore, the path selecting program 170a may be stored in a computer or a server device connected to the computer 100 over a public circuit, the Internet, a local area network (LAN), or a wide area network (WAN). The path selecting program 170a thus stored may be downloaded onto the computer 100, and executed by the computer 100.

**Claims**

1. A path selecting program that causes a computer to execute a process comprising:

   extracting(S103) a plurality of representative points from a presence probability distribution of states of a target;
   identifying(S104) a first plurality of state transition paths between the plurality of representative points; and
   selecting(S303) a second plurality of state transition paths from the first plurality of state transition paths, based on a probability density of each path included in the first plurality of state transition paths.

2. The path selecting program according to claim 1, wherein the extracting(S103) includes extracting, as the representative points, points of local maxima in a mixture Gaussian distribution corresponding to the presence probability distribution of the states of the target.

3. The path selecting program according to claim 1, wherein the identifying(S104) includes identifying, as the first plurality of state transition paths, a fully connected graph including nodes each corresponding to the plurality of representative points, and an edge connecting each pair of the nodes.

4. The path selecting program according to claim 1, wherein the identifying(S104) includes identifying, as the first plurality of state transition paths, a graph corresponding to a minimum spanning tree, from a fully connected graph including nodes each corresponding to the plurality of representative points, and an edge connecting each pair of the nodes.

5. The path selecting program according to claim 1, wherein the selecting(S303) includes selecting the second plurality of state transition paths based on a difference between maximum and minimum probability densities on each one of the first plurality of state transition paths.

6. The path selecting program according to claim 1, wherein the selecting(S303) includes selecting the second plurality of state transition paths based on a probability density of a first state, among states included in each path of the first plurality of state transition paths.

7. The path selecting program according to claim 1, wherein the selecting(S303) includes selecting the second plurality of state transition paths based on a difference between a probability density of a first state and a probability density of a second state, among states included in each path of the first plurality of state transition paths.

8. A path selecting method carried out by a computer(100), comprising:

   extracting(S103) a plurality of representative points from a presence probability distribution of states of a target;
   identifying(S104) a first plurality of state transition paths between the plurality of representative points; and
   selecting(S303) a second plurality of state transition paths from the first plurality of state transition paths, based on a probability density of each path included in the first plurality of state transition paths.

9. The path selecting method according to claim 8, wherein the extracting(S103) includes extracting, as the representative points, points of local maxima in a mixture Gaussian distribution corresponding to the presence probability distribution of the states of the target.

10. The path selecting method according to claim 8, wherein the identifying(S104) includes identifying, as the first plurality of state transition paths, a fully connected graph including nodes each corresponding to the plurality of representative points, and an edge connecting each pair of the nodes.

11. The path selecting method according to claim 8, wherein the identifying(S104) includes identifying, as the first plurality of state transition paths, a graph corresponding to a minimum spanning tree, from a fully connected graph including nodes each corresponding to the plurality of representative points, and an edge connecting each pair of the nodes.

12. The path selecting method according to claim 8, wherein the selecting(S303) includes selecting the second plurality of state transition paths based on a difference between maximum and minimum probability densities on each one of the first plurality of state transition paths.

13. The path selecting method according to claim 8, wherein the selecting(S303) includes selecting the second plurality of state transition paths based on a probability density of a first state, among states included in each path of the first plurality of state transition paths.

14. The path selecting method according to claim 8, wherein the selecting(S303) includes selecting the second plurality of state transition paths based on a difference between a probability density of a first state and a probability density of a second state, among states included in each path of the first plurality of state transition paths.

15. A path selecting apparatus(10) comprising:

   an extracting unit(15B) configured to extract a plurality of representative points from a presence probability distribution of states of a target;
   an identifying unit(15C) configured to identify a first plurality of state transition paths between the plurality of representative points; and
   a selecting unit(15D) configured to select a second plurality of state transition paths from the first plurality of state transition paths, based on a probability density of each path included in the first plurality of state transition paths.

# FIG.1

# FIG.2

# FIG.3

QUASI-FREE ENERGY

STABLE

$E_1$ ... $E_{max}$

$\Delta E_{(E1-E0)}$

$E_0$

$\Delta E_{(Emax-Emin)}$

$E_{min}$

Path

51    40    21    53    20    11

B    C2    E1    E2    E4    E5

STRUCTURAL CHANGE

EP 4 411 571 A1

# FIG.4

# FIG.5

# FIG.6

```
              ┌──────────────┐
              │    START     │
              └──────┬───────┘
                     │            ⌇S101
        ┌────────────▼─────────────────┐
        │    RECEIVE INPUT OF IMAGE     │
        └────────────┬─────────────────┘
                     │            ⌇S102
        ┌────────────▼─────────────────┐
        │ OBTAIN PROBABILITY DENSITY    │
        │     p(z) OF STRUCTURE         │
        └────────────┬─────────────────┘
                     │            ⌇S103
        ┌────────────▼─────────────────┐
        │  FIND POINTS OF INTERESTS     │
        │ (REPRESENTATIVE POINTS) FROM  │
        │ PROBABILITY DENSITY p(z) OF   │
        │          STRUCTURE            │
        └────────────┬─────────────────┘
                     │            ⌇S104
        ┌────────────▼─────────────────┐
        │ GENERATE FULLY CONNECTED      │
        │ GRAPH BY ADDING EDGES BETWEEN │
        │   REPRESENTATIVE POINTS       │
        └────────────┬─────────────────┘
                     │
              ┌──────▼───────┐
              │     END      │
              └──────────────┘
```

# FIG.7

```
┌─────────────────┐
│      START      │
└─────────────────┘
         │
         ▼                              ⌐S301
┌──────────────────────────────────────────────┐
│  DESIGNATE PATHWAY GENERATION CONDITION        │
└──────────────────────────────────────────────┘
         │
         ▼                              ⌐S302
┌──────────────────────────────────────────────┐
│  GENERATE PLURALITY OF PATHWAYS SUITABLE FOR   │
│                  PURPOSE                        │
└──────────────────────────────────────────────┘
         │
         ▼                              ⌐S303
┌──────────────────────────────────────────────┐
│  EXTRACT EFFECTIVE PATHWAY IN ACCORDANCE WITH  │
│    EXTRACTION CONDITION, BASED ON LENGTHS OF    │
│    EDGES OR PROBABILITY DENSITIES ON EDGES      │
└──────────────────────────────────────────────┘
         │
         ▼                              ⌐S304
┌──────────────────────────────────────────────┐
│  OUTPUT RESULTS FROM THOSE WITH HIGH PATH      │
│          SCORES AT HIGHER PRIORITY             │
│  GRAPH DIAGRAM                                  │
│  ENERGY OF STRUCTURAL CHANGE ON EACH PATH       │
│  VIDEO OF SPECIFIC PROTEIN OR COMPOUND          │
│  DEFORMATION                                    │
└──────────────────────────────────────────────┘
         │
         ▼
┌─────────────────┐
│       END       │
└─────────────────┘
```

# FIG.8

COMPUTER 100

SPEAKER 110b

OPERATION UNIT 110a

CAMERA 110c

CPU 150

ROM 160

140 BUS

DISPLAY 120

RAM 180
PATHWAY SELECTING PROCESS 180a

HDD 170
PATH SELECTING PROGRAM 170a

COMMUNI-CATING UNIT 130

EP 4 411 571 A1

Europäisches Patentamt

European Patent Office

Office européen des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Benoit Playe: "Machine learning approaches for drug virtual screening", , 17 July 2019 (2019-07-17), XP055698873, Retrieved from the Internet: URL:https://pastel.archives-ouvertes.fr/tel-02186833/document [retrieved on 2020-05-27] * Chapter 4; pp 101-107; Chapter 6; Appendix * | 1-15 | INV. G06F18/20 G06V20/69 |
| A | FERNANDO A ESCOBEDO ET AL: "TOPICAL REVIEW; Transition path sampling and forward flux sampling. Applications to biological systems", JOURNAL OF PHYSICS: CONDENSED MATTER, INSTITUTE OF PHYSICS PUBLISHING, BRISTOL, GB, vol. 21, no. 33, 19 August 2009 (2009-08-19), page 333101, XP020160376, ISSN: 0953-8984 * Section 2; Section 3 * | 1-15 | |
| | | | TECHNICAL FIELDS SEARCHED (IPC) |
| A | MAXWELL I ZIMMERMAN ET AL: "Choice of adaptive sampling strategy impacts state discovery, transition probabilities, and the apparent mechanism of conformational changes", ARXIV.ORG, CORNELL UNIVERSITY LIBRARY, 201 OLIN LIBRARY CORNELL UNIVERSITY ITHACA, NY 14853, 12 May 2018 (2018-05-12), XP081234137, * Introduction; Results and discussion * | 1-15 | G06F G06V |

-/--

The present search report has been drawn up for all claims

| Place of search | Date of completion of the search | Examiner |
|---|---|---|
| The Hague | 5 June 2024 | Androulidakis, Iosif |

EPO FORM 1503 03.82 (P04C01)

Europäisches
Patentamt

European
Patent Office

Office européen
des brevets

# EUROPEAN SEARCH REPORT

**Application Number**

EP 24 15 2569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SKEEL ROBERT D ET AL: "A minimization principle for transition paths of maximum flux for collective variables", THEORETICAL CHEMISTRY ACCOUNTS : THEORY, COMPUTATION, AND MODELING ; THEORETICA CHIMICA ACTA, SPRINGER, BERLIN, DE, vol. 136, no. 1, 21 December 2016 (2016-12-21), pages 1-12, XP036120090, ISSN: 1432-881X, DOI: 10.1007/S00214-016-2041-3 [retrieved on 2016-12-21] * Section 2; Section 3; Section 4 * | 1-15 | |
| A | RINTALA T J ET AL: "Network approaches for modeling the effect of drugs and diseases", BRIEFINGS IN BIOINFORMATICS, vol. 23, no. 4, 18 July 2022 (2022-07-18), XP093085393, GB ISSN: 1467-5463, DOI: 10.1093/bib/bbac229 Retrieved from the Internet: URL:https://academic.oup.com/bib/article-pdf/23/4/bbac229/45017502/bbac229.pdf> * the whole document * | 1-15 | |
| A | CHOWDHURY DEBASHISH ED - ELIAZAR IDDO ET AL: "Stochastic mechano-chemical kinetics of molecular motors: A multidisciplinary enterprise from a physicist's perspec", PHYSICS REPORTS, ELSEVIER, AMSTERDAM, NL, vol. 529, no. 1, 28 March 2013 (2013-03-28), pages 1-197, XP028568521, ISSN: 0370-1573, DOI: 10.1016/J.PHYSREP.2013.03.005 * section 2; section 8; section 10 * | 1-15 | TECHNICAL FIELDS SEARCHED (IPC) |

The present search report has been drawn up for all claims

| Place of search | Date of completion of the search | Examiner |
|---|---|---|
| The Hague | 5 June 2024 | Androulidakis, Iosif |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LAUREL F KINMAN ; BARRETT M POWELL ; ELLEN D ZHONG ; BONNIE BERGER ; JOSEPH H DAVIS.** Uncovering structural ensembles from single-particle cryo-em data using cryodrgn. *Nature Protocols,* 2022, 1-31

- **HENNIG, C.** Ridgeline plot and clusterwise stability as tools for merging mixture Gaussian components. *Classification as a Tool for Research,* 2010, 109-116